# EUROPÄISCHE PATENTSCHRIFT

(11) **EP 0 718 376 B1**
(45) Veröffentlichungstag und Bekanntmachung des Hinweises auf die Patenterteilung: **18.07.2001**
(21) Anmeldenummer: 95119598.1
(22) Anmeldetag: 13.12.1995
(51) Int. Cl.: C09B 67/48, C09B 67/10, C09B 41/00, C09B 67/38, D06P 1/18, C09B 29/085

(54) **Färbestabiler Monoazofarbstoff, dessen Herstellung und Verwendung**
Colour-fast monoazo dye, its manufacture and its use
Colorant monoazoique à teinte stable, sa fabrication et son utilisation

(30) Priorität: 24.12.1994 DE 4446615
(43) Veröffentlichungstag der Anmeldung: 26.06.1996
(73) Patentinhaber: DyStar Textilfarben GmbH & Co. Deutschland KG, 60318 Frankfurt am Main (DE)
(72) Erfinder: Kruse, Hubert DI, D-61462 Königstein (DE); Kühlwein, Jürgen, Dr., D-63150 Heusenstamm (DE); Bühler, Ulrich, Dr., D-63755 Alzenau (DE)

(56) Entgegenhaltungen:
- EP-A- 0 019 831
- EP-A- 0 563 975
- EP-A- 0 651 026
- CH-A- 343 560
- GB-A- 852 396

## Beschreibung

Die vorliegende Erfindung betrifft eine stabile Kristallmodifikation ("β-Modifikation") des Farbstoffs der Formel I 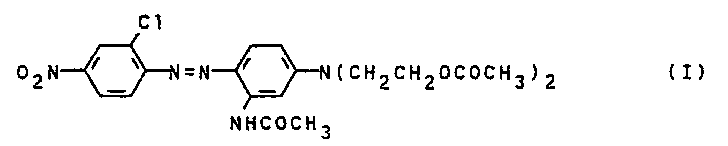 die im Röntgenbeugungsdiagramm (Cu-K_{α}-Strahlung) Linien bei folgenden Beugungswinkeln 2 θ (°) aufweist;
- Linien starker Intensität:: 11,2; 26,9
- Linien mittlerer Intensität:: 5,1; 9,8; 11,8; 15,0; 17,7; 19,6; 20,3; 21,8; 22,5; 24,3

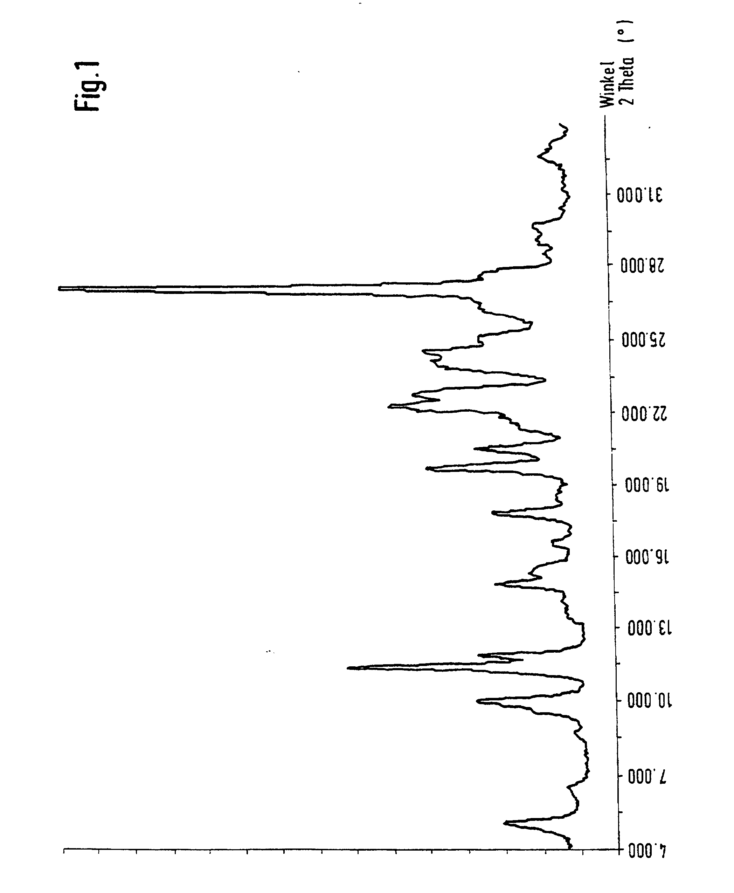

Das mit Cu K_{α}-Strahlung aufgenommene Röntgenbeugungsdiagramm der färbestabilen β-Modifikation ist in Figur 1 dargestellt. Zur Aufnahme wurde ein rechnergesteuertes Siemens D 500 Pulverdifraktometer benutzt.

Färbestabile β-Modifikationen von anderen Azofarbstoffen sowie verfahren zu deren Herstellung werden bereits in den Europäischen Patentschriften EP-A-0 019 831 und EP-A-0 563 975 beschrieben.

Der Farbstoff der Formel I ist bekannt (CH-343560, Beispiel 3) und kann durch Diazotieren von 2-Chlor-4-nitro-anilin und Kuppeln auf 3-(N,N-Bis-acetoxyethylamino)-acetanilid in wäßrig mineralsaurem Medium erhalten werden.

Dabei fällt er aber in der instabilen α-Modifikation an, die im Röntgenbeugungsdiagramm (Cu-K_{α}-Strahlung) Linien bei folgenden Beugungswinkeln 2 θ (°) aufweist:
- Linien starker Intensität:: 24,7
- Linien mittlerer Intensität:: 4,6; 8,2; 9,7; 13,8; 14,5; 15,5; 18,4; 19,9; 21,3; 21,9; 23,5; 25,8; 26,4; 28,7

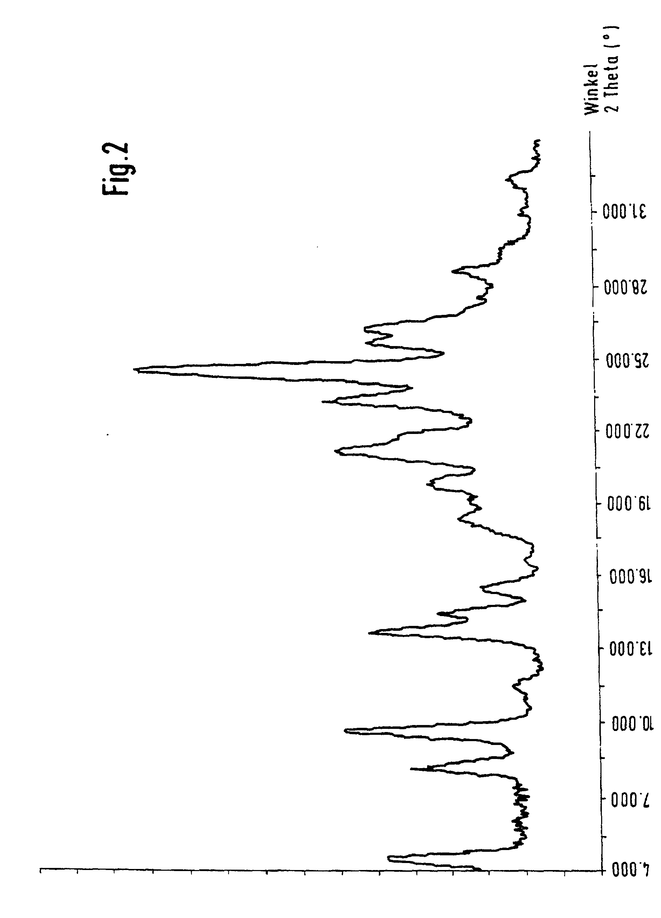

Das entsprechende Röntgenbeugungsdiagramm ist in Figur 2 wiedergegeben.

Gemäß Stand der Technik wird der Farbstoff der Formel I bisher in der α-Modifikation in Form von Pulver- oder Flüssigpräparationen auf den Markt gebracht. Diese Präparationen weisen jedoch erhebliche technische Mängel auf, insbesondere bei ihrer Handhabung, jedoch auch bereits bei ihrer Herstellung sowie auch beim Färben von textilen Polyestermaterialien. Technische Mängel bei ihrer Handhabung treten beispielsweise bei der Redispergierung dieser Präparationen auf, d.h. bei ihrer Einarbeitung in Färbeflotten und Druckpasten. Probleme treten jedoch insbesondere auf, wenn diese Präparationen in redispergierter Form in modernen Farbküchen eingesetzt werden.

Dagegen bereitet der Farbstoff in der β-Modifikation keinerlei Schwierigkeiten. Beispielsweise lassen sich bei der Herstellung von Pulverpräparationen höhere Raum-Zeit-Ausbeuten erzielen und Färbungen auf Stückware und Wickelkörpern fallen stippenfrei bzw. ohne Farbstoffablagerungen, also homogen, an.

Die erfindungsgemäße β-Modifikation kann durch Erhitzen der α-Modifikation in wäßriger Phase auf Temperaturen von 70 bis 150°C, vorzugsweise 90 bis 130°C, erhalten werden. In der Regel erfolgt dieses Erhitzen in wäßriger Suspension, zweckmäßigerweise unter Rühren. Liegen die anzuwendenden Temperaturen über dem Siedepunkt der wäßrigen Phase, wird die Umwandlung in die β-Modifikation in geschlossenen Gefäßen, beispielsweise Autoklaven, ausgeführt.

Die vollständige Überführung der α- in die β-Modifikation nimmt in der Regel 0,5 bis 5 Stunden in Anspruch, wobei eine Reaktionskontrolle durch röntgenographische oder mikroskopische Untersuchung von während der Hitzebehandlung entnommenen Proben erfolgen kann.

Bei der Überführung der α- in die β-Modifikation kann ein Zusatz einer oder mehrerer oberflächenaktiver Substanzen zu der wäßrigen Phase zweckmäßig sein. Die genannten oberflächenaktiven Substanzen können benetzend, viskositätsmindernd, dispergierend oder anlösend wirken und anionischer, kationischer oder nichtionischer Natur sein.

Geeignete oberflächenaktive Substanzen sind z.B. Alkalisalze von Ligninsulfonaten, Alkalisalze der Kondensationsprodukte aus Naphthalinsulfonsäuren und Formaldehyd, Polyvinylsulfonate, oxethylierte Novolake, oxethylierte Fettalkohole, Fettsäurepolyglykolester und tertiäre Phosphorsäureester. Die oberflächenaktiven Substanzen können einzeln oder in Kombination miteinander verwendet werden. Die Menge an oberflächenaktiver Substanz bezogen auf die Menge an Farbstoff der Formel I in α-Modifikation beträgt in der Regel 0,01 bis 400 Gew.-% und hängt von der Weiterverarbeitung ab.

Nach der Überführung in die β-Modifikation kann der Farbstoff beispielsweise durch Filtration aus der wäßrigen Suspension isoliert werden. Zur Vermeidung einer Belastung des Abwassers und um Ausbeuteverluste zu vermeiden, werden hierbei in der Regel nur 0,01 bis 10 Gew.-%, vorzugsweise 0,1 bis 1 Gew.-% der oberflächenaktiven Substanzen eingesetzt.

Es ist jedoch auch möglich, den Farbstoff unmittelbar nach der Wärmebehandlung ohne Zwischenisolierung zu finishen, das heißt in die handelsüblichen Pulver- oder Flüssigpräparationen zu überführen. Zu diesem Zweck wird die wärmebehandelte Suspension durch Mahlung in eine Dispersion überführt. Es ist dabei zweckmäßig, die Wärmebehandlung in Gegenwart derjenigen Dispergier-und gegebenenfalls auch Hilfsmittel durchzuführen, die in der gefinishten Pulver-oder Flüssigpräparation enthalten sein sollen. Diese sind mit den oben genannten oberflächenaktiven Substanzen identisch. Wurde während der Wärmebehandlung nicht die Gesamtmenge dieser Dispergier-und Hilfsmittel zugesetzt, so wird vor der Mahlung die Restmenge zugegeben. Zur Wärmebehandlung werden in diesem Falle in der Regel 10 bis 400 Gew.-%, vorzugsweise 20 bis 200 Gew.-%, oberflächenaktive Substanzen, bezogen auf den Farbstoff in der α-Modifikation, zugegeben.

Die Überführung der α- in die β-Modifikation durch Wärmebehandlung in wäßriger Phase kann auch unter Zusatz eines oder mehrerer organischer Lösungsmitteln erfolgen. Diese organischen Lösungsmittel können entweder mit Wasser in jedem Verhältnis mischbar sein oder sich nicht oder aber nur wenig mit Wasser mischen.

Mit Wasser mischbare Lösungsmittel sind beispielsweise Ethanol, i-Propanol und Dimethylsulfoxid. Mit Wasser nicht oder nur wenig mischbare Lösungsmittel sind beispielsweise n-Butanol, Butylacetat und Toluol.

Die Menge an organischen Lösungsmitteln, bezogen auf die wäßrige Phase, kann in weiten Grenzen variieren. Bei mit Wasser mischbaren Lösungsmitteln kann sie zwischen 5 und 95 Gew.-%, vorzugsweise zwischen 10 und 50 Gew.-%, liegen. Bei mit Wasser wenig oder nicht mischbaren Lösungsmitteln liegt sie zwischen 1 und 25 Gew.-%, vorzugsweise bei 2 bis 10 Gew.-%.

Nach der Überführung in die β-Modifikation wird das organische Lösungsmittel in der Regel durch Destillation oder Wasserdampfdestillation von der Farbstoffsuspension abgetrennt und der Farbstoff aus wäßriger Phase durch Filtration isoliert. Der Farbstoff kann jedoch auch aus dem Lösungsmittelgemisch direkt durch Filtration isoliert werden.

Vorteilhaft ist es, beim Erhitzen der Farbstoffsuspension in einer wäßrigen oder aber lösungsmittelhaltigen wäßrigen Phase den pH-Wert dieser Wasserphase auf 6 bis 8, vorzugsweise 7 einzustellen und bei diesem pH-Wert zu halten, da es sonst zu Farbstärkeverlusten und Farbtonabweichungen kommen kann.

Die α-Modifikation des Farbstoffes der Formel I kann auch durch Umkristallisation in die β-Modifikation überführt werden. Als Lösungsmittel können dabei organische Lösungsmittel, Mischungen von organischen Lösungsmitteln oder auch Mischungen von wassermischbaren organischen Lösungsmitteln mit Wasser dienen.

Geeignete organische Lösungsmittel sind beispielsweise Ethanol, Butylacetat oder Toluol.

Sinnvollerweise wird die α-Modifikation in dem gewählten Lösungsmittel durch Erwärmen gelöst, worauf beim Abkühlen die β-Modifikation auskristallisiert. Alternativ kann die β-Modifikation durch Zugabe eines schlechter lösenden Lösungsmittels, zum Beispiel Wasser, aus der Lösung ausgefällt werden.

Der erhaltene Farbstoff in der β-Modifikation kann durch Filtration aus dem Lösungsmittel isoliert werden. Es ist aber auch möglich, das Lösungsmittel nach Wasserzusatz durch Destillation oder Wasserdampfdestillation auszutreiben und anschließend den Farbstoff durch Filtration aus wäßriger Phase zu isolieren.

Es ist auch möglich, die Umwandlung der α- in die β-Modifikation unmittelbar nach der Kupplung durch Wärmebehandlung der Kupplungssuspension auszuführen. Dies kann im gleichen Reaktionsgefäß wie die Kupplung erfolgen.

Um eine Verseifung des Farbstoffs zu verhindern, wird die aus der Diazotierung und Kupplung stammende Mineralsäure zuvor in der Kupplungssuspension gänzlich oder weitgehend neutralisiert.

Schließlich kann die β-Modifikation auch direkt bei der Kupplung erhalten werden, d.h. ohne jegliche Wärmebehandlung, wenn die Kupplung in Gegenwart von mit Wasser nicht oder wenig mischbaren organischen Lösungsmitteln durchgeführt wird.

Geeignete Lösungsmittel sind beispielsweise Carbonsäureester wie Ethylacetat oder Butylacetat, Chlorkohlenwasserstoff wie 1,2-Dichlorethan, aromatische Lösungsmittel, wie Toluol, oder Kohlenwasserstoff wie Cyclohexan. Bezogen auf die Menge der bei der Kupplung entstehenden Farbstoffs der Formel I werden 1 bis 20 Gew.-%, vorzugsweise 2 bis 10 Gew.-% dieser Lösungsmittel eingesetzt. Bezogen auf die in der Kupplungssuspension nach der Kupplung vorliegende Wassermenge werden 250 ppm bis 0,1 Promille eingesetzt. Das Lösungsmittel wird zweckmäßigerweise dem Kuppler vor der Kupplung zugesetzt. Es kann nach der Kupplung durch Wasserdampfdestillation aus der Kupplungssuspension entfernt werden, oder aber es gelangt bei der Filtration ins Filtrat.

Der durch eine Hitzebehandlung oder durch Kristallisation in die β-Modifikation überführte oder aber direkt bei der Kupplung in der β-Modifikation anfallende Farbstoff der Formel I muß anschließend durch einen Aufmahlvorgang in eine Dispersion, d.h. in eine flüssige oder pulverförmige Farbstoffpräparation, überführt werden. Dieses Aufmahlen geschieht in Mühlen, wie z.B. Kugel-, Schwing-, Perl-oder Sandmühlen oder in Knetern. Nach der Aufmahlung liegt die Größe der Farbstoffteilchen bei ca. 0,1 bis 10 µm. Die Aufmahlung erfolgt in Gegenwart von Dispergiermitteln, wie beispielsweise Kondensationsprodukten aus Naphthalinsulfonsäure und Formaldehyd oder Phenol, Formaldehyd und Natriumbisulfit, Alkalisalzen von Ligninsulfonaten oder Sulfitcelluloseablauge oder Polyvinylsulfonaten, die die Oberfläche der mechanisch zerkleinerten Farbstoffteilchen belegen und so ihre Rekristallisation verhindern. Es kann vorteilhaft sein, neben diesen Dispergiermitteln dem Farbstoff auch andere Hilfsmittel, wie z.B. Netzmittel, Frostschutzmittel, Entstaubungsmittel, Hydrophilierungsmittel oder Biozide bei der Aufmahlung zuzusetzen.

Der für die Herstellung von Farbstoffpulvern erforderliche Trocknungsprozeß kann in handelsüblichen Zerstäubungstrocknern durchgeführt werden.

Die β-Modifikation des Farbstoffs der Formel I benetzt beim Ansetzen von Färbe-und Klotzflotten sowie auch von Druckteigen besser als die α-Modifikation und läßt sich rasch und ohne aufwendiges manuelles oder maschinelles Rühren dispergieren. Die Flotten und Druckteige sind homogen und lassen sich in modernen Farbküchen problemlos verarbeiten, ohne die Düsen zu verstopfen.

Die Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart der Dispergier-und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern. Die thermische Stabilität äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die erfindungsgemäße β-Modifikation des Farbstoffs der Formel I eignet sich im Gegensatz zur α-Modifikation uneingeschränkt zum Färben und Bedrucken von Textilmaterialien aus Polyester, wie Polyethylenglykolterephthalat, und/oder Celluloseestern, wie Celluloseacetat, oder Mischgeweben dieser Materialien mit Wolle oder Cellulose.

Die Überlegenheit der β-Modifikation im Vergleich zur α-Modifikation wird auch beim Färben aus wäßrigem Färbebad unter modernen Praxisbedingungen deutlich. Diese Bedingungen sind gekennzeichnet durch hohe Wickeldichten bei Kreuzspul-und Baumfärbungen, kurze Flottenverhältnisse, also hohe Farbstoffkonzentrationen sowie hohe Scherkräfte in der Färbeflotte bedingt durch hohe Pumpenleistungen. Auch unter diesen Bedingungen neigt die β-Modifikation nicht zu Agglomeration, und es kommt nicht zu Ablagerungen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit der erfindungsgemäßen β-Modifikation schließlich wird ebenfalls ein homogenes, stippenfreies Warenbild erhalten.

### Beispiel 1

a) 100 g des Farbstoffs der allg. Formel I werden durch Diazotieren von 2-Chlor-4-nitroanilin in konzentrierter Schwefelsäure mit 40%iger Nitrosylschwefelsäure und durch Kuppeln der so erhaltenen Diazolösung auf eine wäßrige essigsaure Lösung von 3-(N,N-Bis-acetoxyethylamino)-acetanilid erhalten. Der Farbstoff wird durch Filtration isoliert und mit Wasser neutral gewaschen. Er liegt als wasserfeuchter Preßkuchen in der α-Modifikation vor.
b) 100 g des nach a) hergestellten Farbstoffs werden in 500 ml Wasser in Gegenwart von 0,01 g eines Netzmittels in einem Autoklaven 2 Stdn. bei 120°C gerührt. Die Farbstoffsuspension wird danach abgekühlt und erneut filtriert. Der Farbstoff liegt als wasserfeuchter Preßkuchen nun in der β-Modifikation vor.
c) 100 g des nach b) hergestellten Farbstoffs werden mit 100 g eines Natriumligninsulfonats, 2 g eines Emulgators auf Basis Fettalkoholpolyglykolether und 2 g eines Hydrophyliermittels und Wasser in einer Sandmühle gemahlen, bis 90% der Farbstoffteilchen gleich oder kleiner 1 µm sind. Die zugesetzte Wassermenge wurde dabei so berechnet, daß der Farbstoffgehalt in der nach dem Aufmahlen erhaltenen Flüssigpräparation 22% beträgt.
d) Wird die nach c) hergestellte Flüssigpräparation mit einem Druck von ca. 3 kp/m² durch eine Düse aus VA-Stahl mit einem Durchmesser von 0,7 mm gedrückt, so ist ein exaktes, wiederholtes Dosieren problemlos möglich.

Wird dagegen eine Flüssigpräparation eingesetzt, die der Hitzebehandlung gemäß b) nicht unterworfen wurde und in der α-Modifikation vorliegt, so kommt es beim Dosieren zu spritzender Abgabe von Farbstoff aus der Düse bzw. zu einer vollständigen Verstopfung.

### Beispiel 2

a) 100 g des nach 1b) hergestellten Farbstoffs werden mit 100 g eines Natriumligninsulfonats, 100 Teilen eines Kondensationsproduktes aus Kresol, Nonylphenol, Formaldehyd und Natriumhydrogensulfit und Wasser in einer Sandmühle bis zu der in lc) angegebenen Feinverteilung aufgemahlen. Der so erhaltene Mahlteig wird in einem Sprühtrockner bei einer Eingangstemperatur von 155°C und einer Ausgangstemperatur von 85°C sprühgetrocknet.
b) Wird das nach 2a) erhaltene Pulver zur Herstellung einer Färbeflotte in Wasser gegeben, so dispergiert es teilweise schon beim Absinken auf den Gefäßboden und vollständig nach kurzem Umrühren.
c) Eine Pulverpräparation, die ohne die unter 1b) beschriebene Hitzebehandlung hergestellt wurde, muß demgegenüber bis zum Erhalt einer homogenen Dispersion mit einem speziellen Rührer längere Zeit gerührt und evtl. anschließend filtriert werden, um stippenfreie Färbungen zu erhalten.
d) Werden mit der gemäß 2a) hergestellten Pulverpräparation Kreuzspulen gefärbt, so sind die erhaltenen Färbungen egal und reibecht, d.h. die Farbtiefen in den äußeren und inneren Lagen des Wickelkörpers sind gleich und es kommt nicht zu Farbstoffablagerungen.

### Beispiel 3

100 g des nach la) hergestellten und getrockneten Farbstoffs der Formel I werden aus 600 ml Toluol umkristallisiert. Ein daraus gemäß den Angaben unter 2a) hergestelltes Farbstoffpulver erfüllt alle anwendungstechnischen Anforderungen.

### Beispiel 4

100 g des nach la) hergestellten Farbstoffs der Formel I werden mit 50 g eines Natriumligninsulfonats und Wasser angeschlagen und 1,5 Stdn. auf 120°C erhitzt. Nach dem Abkühlen werden weitere 50 g eines Natriumligninsulfonats zugesetzt und die Suspension durch Sandmahlung in eine Dispersion überführt, die ebenfalls alle technischen Anforderungen erfüllt.

### Beispiel 5

172,5 g 2-Chlor-4-nitroanilin werden in konzentrierter Schwefelsäure mit 325 g 40%-iger Nitrosylschwefelsäure diazotiert und die so erhaltene Diazolösung unter direkter Eiskühlung bei 10 bis 15°C in Gegenwart von 30 g Butylacetat auf eine wäßrig essigsaure Lösung von 340 g 3-(N,N-Bis-acetoxyethylamino)-acetanilid gekuppelt. Der nach Filtration und Waschen mit Wasser erhaltene Preßkuchen wird mit 500 g eines Natriumligninsulfonats bei 60°C in einer Kugelmühle aufgemahlen, bis die unter lc) angegebene Feinverteilung erreicht ist. Die so erhaltene Flüssigpräparation erfüllt ebenfalls alle technischen Anforderungen.

## Patentansprüche

1. β-Modifikation des Farbstoffs der Formel I 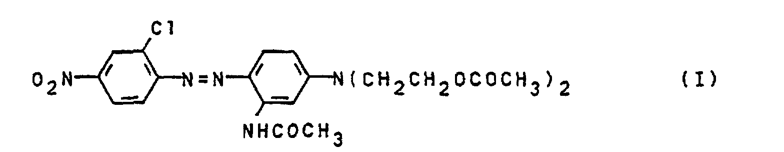 mit dem Röntgenbeugungsdiagramm (Cu-K_{α}-Strahlung) mit folgenden Linien bei Beugungswinkel 2 θ (^{°}):
Linien starker Intensität: 11,2; 26,9
Linien mittlerer Intensität: 5,1; 9,8; 11,8; 15,0; 17,7; 19,6; 20,3; 21,8; 22,5; 24,3

2. Verfahren zur Herstellung der β-Modifikation des Farbstoffs der Formel I gemäß Anspruch 1, dadurch gekennzeichnet, daß die α-Modifikation des Farbstoffs der Formel I in wäßriger Phase auf Temperaturen von 70 bis 150°C erhitzt wird.

3. Verfahren gemäß Anspruch 2, dadurch gekennzeichnet, daß die wäßrige Phase eine oder mehrere oberflächenaktive Substanzen enthält.

4. Verfahren gemäß Anspruch 2 und/oder 3, dadurch gekennzeichnet, daß die wäßrige Phase ein oder mehrere organische Lösungsmittel enthält.

5. Verfahren zur Herstellung der β-Modifikation des Farbstoffs der Formel I gemäß Anspruch 1, dadurch gekennzeichnet, daß die α-Modifikation des Farbstoffs der Formel I umkristallisiert wird.

6. verfahren zur Herstellung der β-Modifikation des Farbstoffs der Formel I gemäß Anspruch 1, dadurch gekennzeichnet, daß 2-Chlor-4-nitroanilin diazotiert und in Gegenwart eines mit Wasser nicht oder wenig mischbaren organischen Lösungsmittels auf 3-(N,N-Bis-acetoxyethylamino)-acetanilid gekuppelt wird.

7. Verwendung der β-Modifikation des Farbstoffs der Formel I gemäß Anspruch 1 zur Herstellung von flüssigen oder pulverförmigen Farbstoffpräparationen.

8. Verwendung der β-Modifikation des Farbstoffs der Formel I gemäß Anspruch 1 zum Färben und Bedrucken von Textilmaterialien aus Polyester und/oder Celluloseestern oder Mischgeweben dieser Materialien mit Wolle oder Cellulose.

## Claims

1. β modification of the dye of the formula I 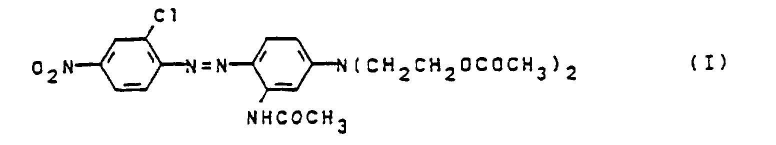 having an X-ray diffraction pattern (Cu K_{α} radiation) containing lines at the following diffraction angles 2 e (°):
high-intensity lines: 11.2, 26.9
medium-intensity lines: 5.1, 9.8, 11.8, 15.0, 17.7, 19.6, 20.3, 21.8, 22.5, 24.3

2. Process for preparing the β modification of the dye of the formula I according to Claim 1, characterized in that the α modification of the dye of the formula I is heated in aqueous phase to temperatures of 70 to 150°C.

3. Process according to Claim 2, characterized in that the aqueous phase contains one or more surface-active substances.

4. Process according to Claim 2 and/or 3, characterized in that the aqueous phase contains one or more organic solvents.

5. Process for preparing the % modification of the dye of the formula I according to Claim 1, characterized in that the α modification of the dye of the formula I is recrystallized.

6. Process for preparing the β modification of the dye of the formula I according to Claim 1, characterized in that 2-chloro-4-nitroaniline is diazotized, and the resulting diazonium salt is coupled in the presence of a water-immiscible or a slightly water-miscible organic solvent onto 3-[N,N-bis(acetoxyethyl)amino]acetanilide.

7. Use of the β modification of the dye of the formula I according to Claim 1 for preparing liquid or pulverulent dye preparations.

8. Use of the β modification of the dye of the formula I according to Claim 1 for dyeing and printing textile materials made of polyester and/or cellulose esters or blend fabrics of these materials with wool or cellulose.

## Revendications

1. Modification β du colorant de formule I 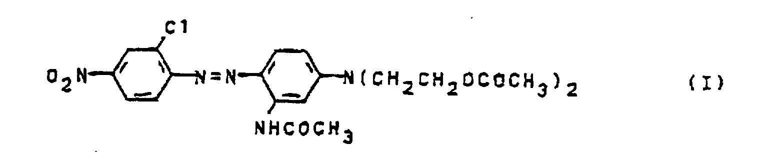 dans le diagramme de diffraction des rayons X (rayonnement Cu-K_{α}) présentant les raies suivantes pour un angle de diffraction 2 θ (^{°}):
Raies de forte intensité: 11,2; 26,9
Raies d'intensité moyenne: 5,1; 9,8; 11,8; 15,0; 17,7; 19,6; 20,3; 21,8; 22,5; 24,3

2. Procédé de préparation de la modification β du colorant de formule I selon la revendication 1, caractérisé en ce que la modification α du colorant de formule I est chauffée en phase aqueuse à des températures de 70 à 150°C.

3. Procédé selon la revendication 2, caractérisé en ce que la phase aqueuse comprend une ou plusieurs substances tensioactives.

4. Procédé selon la revendication 2 et/ou 3, caractérisé en ce que la phase aqueuse comprend un ou plusieurs solvants organiques.

5. Procédé de préparation de la modification β du colorant de formule I selon la revendication 1, caractérisé en ce que la modification α du colorant de formule I est recristallisée.

6. Procédé de préparation de la modification β du colorant de formule I selon la revendication 1, caractérisé en ce que la 2-chloro-4-nitroaniline est diazotée et couplée au 3-(N,N-bis-acétoxyéthylamino)acétanilide en présence d'un solvant organique non ou peu miscible à l'eau.

7. Utilisation de la modification β du colorant de formule I selon la revendication 1 en vue de produire des préparations colorantes liquides ou pulvérulentes.

8. Utilisation de la modification β du colorant de formule I selon la revendication 1 pour la teinture et l'impression de matières textiles en polyester et/ou en esters de cellulose, ou de tissus mixte à base de ces matières et de laine ou de cellulose.
